# EUROPEAN PATENT SPECIFICATION

(11) **EP 2 351 536 B1**
(45) Date of publication and mention of the grant of the patent: **13.04.2016**
(21) Application number: 10152409.8
(22) Date of filing: 02.02.2010
(51) Int. Cl.: A61C 8/00, A61C 13/20

(54) **Method of producing an implant-supported dental prosthesis by using a multi-functional adapter.**
Verfahren zur Herstellung einer implantatgestützten Zahnprothese unter Verwendung eines Multifunktionsadapters.
Méthode de fabrication d'une prothèse dentaire soutenue par implant en utilisant un adaptateur multifonctionnel

(43) Date of publication of application: 03.08.2011
(73) Proprietor: Straumann Holding AG, 4002 Basel (CH)
(72) Inventor: Herweg, Holger, 4002, Basel (CH); Matter, Sandro, 4002, Basel (CH)
(74) Representative: Modiano, Micaela Nadia

(56) References cited:
- EP-A1- 2 130 514
- WO-A1-01/28451
- DE-A1-102006 045 186
- DE-U1- 20 307 643
- FR-A1- 2 800 988
- US-A- 5 662 473
- US-A1- 2001 053 512
- US-A1- 2006 099 549
- US-A1- 2007 292 822
- US-A1- 2008 153 066
- US-B1- 6 788 986

## Description

### FIELD OF THE INVENTION

The invention refers in general to a multi-functional adapter for an implant-supported dental prosthesis in general, and in particular to a multi-functional adapter for an implant-supported dental prosthesis which acts as a template during the manufacture of the dental prosthesis. Furthermore, the present invention relates to a method for manufacturing a dental implant by using a multi-functional adapter.

### BACKGROUND OF THE INVENTION

An implant-supported dental prosthesis is an artificial replacement for one or more natural teeth that gains its support, stability, and retention from a substructure that is implanted under the soft tissues of the basal seat of the device and is in contact with bone.

Nowadays, numerous manufacturers are offering numerous product families having different implant systems for an implant-supported dental prosthesis. Basically, such an implant-supported dental prosthesis is comprised of three parts: 1) an implant, which looks like a screw or cylinder, to be placed into a jaw of a patient to form an anchor for one or more artificial teeth; 2) an extension, which is a small post, preferably a metal post, called an abutment, to be fixed with the implant to complete the foundation on which the new tooth will be placed; and 3) a replacement tooth, called a crown, which forms the visible part of the artificial tooth, to be attached to the abutment.

Us 2006/099549 A1 discloses a metallic abutment on which is fitted a coping, on said coping wax is added, said abutment, coping and wax are then cast together, the coping and the wax are burned out and precious metal is poured building thus a solid body integral with the abutment. A porcelain crown is then fused on said metallic cast abutment. The coping can be used in a scanning process.

However, these implant systems are usually not compatible with each other. Thus, it would be desirable to have a multi-functional adapter for an implant-supported dental prosthesis, with which this compatibility drawback of all prior the art product families could be overcome.

The present invention resolves this problem by providing a multi-functional adapter for an implant-supported dental prosthesis as defined in claim 1, which acts as a template during the manufacture of the dental prosthesis.

Further advantageous aspects of the invention are set out in the dependent claims.

### SUMMARY OF THE INVENTION

The present invention, as disclosed in claim 1, provides a method for producing an implant-supported dental prosthesis by using a multi-functional adapter.

Additional features and advantages of the present invention will be set forth in the dependant claims and the description which follows, and in part will be clear from the description.

### BRIEF DESCRIPTION OF THE DRAWINGS

Fig. 1 shows a perspective view of one embodiment of the multi-functional adapter;
Fig. 2A shows an exploded view of a known prior art implant, a known prior art abutment and a known prior art coping as well the multi-functional adapter of Fig. 1; and
Fig. 2B shows a perspective view of the multi-functional adapter and the known prior art abutment of Fig. 2A, with the adapter positioned on the abutment.

### DETAILED DESCRIPTION OF THE INVENTION

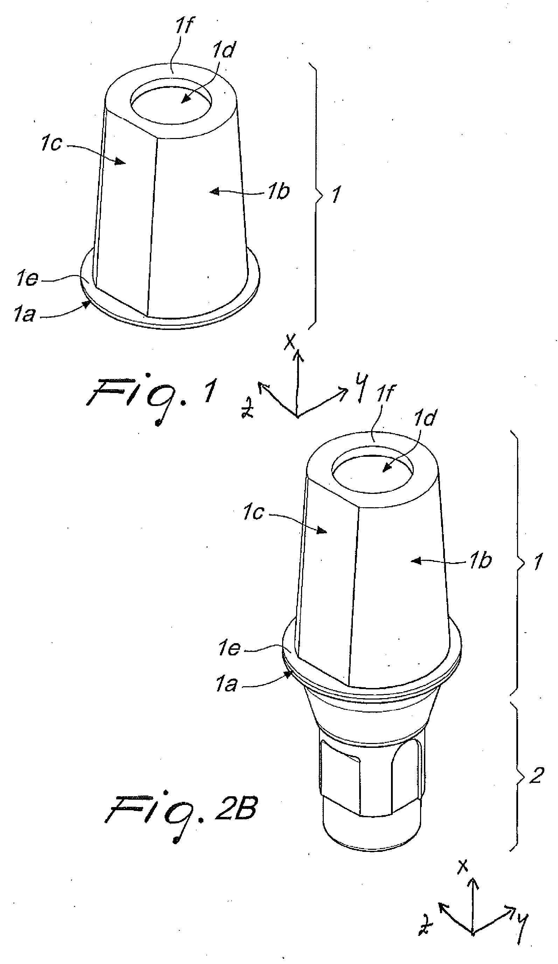

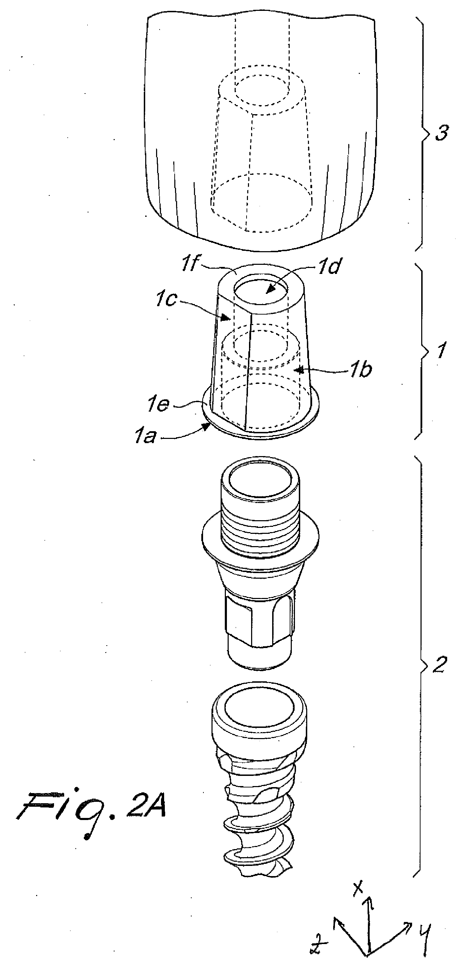

Fig. 1 and 2A disclose a multi-functional adapter 1 for an implant-supported dental prosthesis, used in the method of the present invention. The multi-functional adapter 1 has a defined profile, such as to determine at least one information of an angular position, a height, an x-axis and/or a plane,

The multi-functional adapter 1 is provided with a base portion 1 a and an upper portion 1 b, wherein the base portion 1 a and the upper portion 1b are adapted to respectively receive a first component 2 and a second component 3 of an implant-supported dental prosthesis. The multi-functional adapter 1 is made of a scannable material or has at least a scannable surface and the material is capable of being burnt out.

As used herein, the term "first component" refers to an extension of an implant, which is a small post, preferably a metal post, called an abutment, to be fixed with the implant. There are some implant systems, so-called one-stage implant systems, that do not require an abutment. These systems use an implant, which already has the extension piece attached. Thus, the first component 2 can be a single abutment or an implant having an abutment attached.

As used herein, the term "second component" refers to a replacement tooth, called a crown, which forms the visible part of the artificial tooth. There are some implant systems that use a coping, e. g. ZrO₂ coping, which forms the base of a crown. Thus, the second component 3 can be a crown or a coping.

Referring further to Fig. 1, a perspective view of one example of the multi-functional adapter 1 is shown. In this example, the multi-functional adapter 1 has a substantially disc-shaped base portion 1a and a substantially cylinder-shaped upper portion 1b. The base portion 1a defines a first plateau 1 e on which the upper portion 1 b is formed with at least one substantially flat side surface 1c and a second plateau 1f. The flat side surface 1c can be perpendicular or inclined with respect to the first plateau 1e or the second plateau 1f. A clearance hole 1d extends substantially in the middle of the multi-functional adapter 1 in a longitudinal direction through the cylinder-shaped upper portion 1b and the disk-shaped base portion 1a.

This exemplary profile of the multi-functional adapter 1 can be used to determine at least one of the following information in a scanning step, which will be explained in more detail below. With respect to a coordinate system, shown as x-, y- and z-axis in Fig. 1, an angular position information, a height information, an x-axis information and/or a plane information can be obtained based on the orientation of the flat side surface 1c, the orientation of the first or second plateaus 1e, 1f, and the height of the upper portion 1 b as well as the height of the base portion 1a. In particular, the flat side surface 1c is used to determine the angular position information of the multi-functional adapter 1. The first and second plateaus 1e, 1f are used to determine the plane (namely the y-z plane) information for each of the plateaus and, based on that, the height information of the upper portion 1 b. The upper portion 1 b is used to determine x-axis information of the multi-functional adapter 1. The height of the base portion 1a can be determined based on the y-z plane information for the first plateau 1 e. Thus, the function of the multi-functional adapter 1 can be regarded as that of a scanbody. The clearance hole 1d is intended to serve e. g. as a screw channel within the implant-supported dental prosthesis.

As already mentioned, the multi-functional adapter 1 is made of a scannable material and the material is capable of being burnt out. Preferably, the scannable material is based on a material selected from acrylic polymers, epoxy resins. Especially preferred with acrylic polymers is Polymethylmethacrylate (PMMA), such as Polycon™ (used by Straumann CADCAM GmbH, Germany), but not limited thereto. Polycon^{™} is a filler-free product, which can be burnt out without any residuals. As PMMA has a poor radiopacity usually x-ray contrast agents, such as barium sulfate (BaSO₄) and zirconium dioxide (ZrO₂), are added to PMMA to ensure radiopacity and to facilitate radiologic measurements. In addition to acrylic and epoxy polymers suitable polymers include POM (Polyoxymethylen), Peek (Polyether), Polypropylen, Polyvinylchlorid, Polystyrol, Polyurethan, Polyethylentere-phthalat. Particularly preferred scannable materials include one selected among POM (Polyoxymethylen), PMMA (Polymethylmethacrylat), Peek (Polyether) or Acetal. Most preferred scannable materials include POM (Polyoxymethylen), Peek (Polyether) or Acetal. A further added suitable x-ray contrast agent is aluminiumoxid (Al₂O₃). Suitable prior art compositions for the scannable material having contrast agents include "SR VivoTAC / SR OrthoTAC" von Ivoclar Vivadent AG, FL Schaan.

The present invention provides a method for producing an implant-supported dental prosthesis by using the multi-functional adapter 1. Referring to Fig. 2A, an exploded view of a known prior art implant, a known prior art abutment and a known prior art coping and the multi-functional adapter 1 according to the invention of Fig. 1 is shown. The implant, abutment and coping according to the prior art can be of any implant system and/or product family. In fact, the implant and abutment can be made by a first manufacturer while the coping could be made by a second manufacturer, such that coping and abutment per se would not be compatible to one another. These implant systems and/or product families, the function of the single constituents thereof and the materials used therefore are well known to a person skilled in the art and will not be explained in more detail herein.

In a step a), a first component 2 of an implant-supported dental prosthesis is provided. As already mentioned, the first component 2 can be a single abutment or an implant having an abutment attached. In this example, the first component 2 is a single abutment. The abutment can be a so-called cast abutment and/or be made of gold (Au) or gold metal based alloys.

In a step b), the multi-functional adapter 1 is provided, which has a defined profile, such as to determine at least one information of an angular position, a height, an x-axis and/or a plane, with the base portion 1 a and an upper portion 1 b, wherein the base portion 1 a and the upper portion 1 b are adapted to respectively receive a first component 2 and a second component 3 of an implant-supported dental prosthesis, the multi-functional adapter 1 being made, as already explained, of a scannable material, and capable of being burnt out. Referring to Fig. 1 and Fig. 2A, a perspective view of one embodiment of the multi-functional adapter 1 is shown. In this example, the multi-functional adapter 1 has the substantially disc-shaped base portion 1 a and the substantially cylinder-shaped upper portion 1b. In this example, the base portion 1a of the multi-functional adapter 1 is adapted to receive the abutment of step a).

In a step c), the first component 2, here the abutment of step a), and the multi-functional adapter 1 are made integral with each other. Referring to Fig. 2B, a perspective view of the multi-functional adapter 1 and the prior art abutment of Fig. 2A, with the novel adapter positioned on the abutment, is shown. This step can be carried out by waxing, which is well known to a person skilled in the art and will not be explained in more detail herein, but is not limited thereto. Step c) could also be carried out by gluing, snapping, bounding or fixing by using modeling acrylics or putty.

In a step d), at least the multi-functional adapter 1 is scanned to determine at least one information of an angular position, a height, an x-axis and/or a plane. With respect to a coordinate system, shown as x-, y- and z-axis in Fig. 2A, an angular position information, a height information, an x-axis information and/or a plane information can be obtained based on the orientation of the flat side surface 1 c, the orientation of the first and/or second plateau 1 e, 1 f, and the height of the upper portion 1 b and optionally the height of the base portion 1 a. Thus, the function of the multi-functional adapter 1 can be regarded as that of a scanbody. The exact positioning of this scanbody is crucial for the desired result, as the correct orientation of the second component 3, which can be a crown or a coping, and also the milling data of the same, if the second component 3 is provided as a blank, is determined in step d).

In a step e), the multi-functional adapter 1 is cast on the first component 2, here the abutment. This step is well known to a person skilled in the art and will not be explained in more detail herein.

In a step f), the multi-functional adapter 1 is burnt out to obtain a single solid component. When using a gold abutment, preferably the multi-functional adapter 1 is burnt out with a gold composition such that a single "gold" component is obtained. This step is well known to a person skilled in the art and will not be explained in more detail herein.

In a step g), a second component 3 of an implant-supported dental prosthesis, coping with the single solid component of step f), is provided, which is not compatible with the first component 2, here the abutment. As already mentioned, the second component 3 can be a crown or a coping. In this example, the second component 3 is a coping. The coping can be a CAD designed coping or a CAM milled coping (e. g. by Etkon), which can be made of e. g. ZrO₂. Preferably, a ZrO₂ coping having a screw channel is used. The clearance hole 1 d of the multi-functional adapter 1 is intended to match with this screw channel.

In a step h), the second component 3, here a ZrO₂ coping, and the single solid component of step g) are made integral with each other. This step can be carried out by cementing or gluing, which are well known to a person skilled in the art and will not be explained in more detail herein, but is not limited thereto.

As a result, any desired implant-supported dental prosthesis can be obtained, the first component 2 and the second component 3 of which are not compatible with each other by providing the multi-functional adapter 1, which acts as a template during the manufacture of said dental prosthesis. Thus, the present invention can overcome all of the compatibility drawbacks of all state of the art implant systems.

In the method of the present invention advantageously a multi-functional adapter that can be custom designed to include a plurality of features such as "anti rotation", "clear position" or "key and lock principal" which differentiate between crown (engaging) and bridge (non engaging) may be used.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

## Claims

1. A method for producing an implant-supported dental prosthesis by using a multi-functional adapter (1), comprising the steps of:
a) providing a first component (2) of an implant-supported dental prosthesis;
b) providing a multi-functional adapter (1) having a defined profile, such as to determine at least one information of an angular position, a height, an x-axis and/or a plane, with a base portion (1a) and an upper portion (1b), wherein the base portion (1a) and the upper portion (1b) are adapted to respectively receive the first component (2) and a second component (3) of the implant-supported dental prosthesis, the multi-functional adapter (1) being made of a scannable material, and capable of being burnt out;
c) making the first component (2) and the multi-functional adapter (1) integral with each other;
d) scanning of at least the multi-functional adapter (1) to determine the at least one information of an angular position, a height, an x-axis and/or a plane and using the at least one information to determine the correct orientation of the second component (3) of the implant-supported dental prosthesis;
e) casting the multi-functional adapter (1) on the first component (2);
f) burning out the multi-functional adapter (1) to obtain a single solid component;
g) providing the second component (3) of the implant-supported dental prosthesis with the single solid component; and
h) making the second component (3) and the single solid component integral with each other.

2. The method according to claim 1, wherein the multi-functional adapter has a substantially disc-shaped base portion, defining a first plateau (1 e), on which a substantially cylinder-shaped upper portion is formed with at least one substantially flat side surface (1c) and defining a second plateau (1f), and a clearance hole (1d), extending substantially in the middle of the multi-functional adapter in a longitudinal direction.

3. The method according to claims 1 or 2, wherein step c) is carried out by waxing, gluing, snapping, bounding or fixing by using modeling acrylics or putty; and step h) is carried out by cementing or gluing,

4. The method according to claim 2, wherein the angular information of the multi-functional adapter is determined based on the flat side surface (1c); and/or wherein the plane information is determined based on the first or second plateau (1e, 1f) and the height information of the upper portion (1b) is determined based on plane information of each of the plateaus (1e, 1f); and/or wherein the x-axis information of the multi-functional adapter is determined based on the upper portion (1b); and/or wherein the height of the base portion (1 a) is determined based on the plane information for the first plateau (1 e).

5. The method according to any of the preceding claims, further comprising the step of milling the second component (3) of the implant-supported dental prosthesis from a blank using the at least one information determined in step (d).

## Patentansprüche

1. Ein Verfahren zur Herstellung einer implantatgestützten Zahnprothese unter Verwendung eines Multifunktionsadapters (1), das folgende Schritte umfasst:
a) Bereitstellen einer ersten Komponente (2) einer implantatgestützen Zahnprothese;
b) Bereitstellen eines Multifunktionsadapters (1) mit definiertem Profil, um so mindestens eine Information über eine Winkelposition, eine Höhe, eine x-Achse und/oder eine Ebene zu erhalten, mit einem Grundabschnitt (1a) und mit einem oberen Abschnitt (1b), wobei der Grundabschnitt (1a) und der obere Abschnitt (1b) ausgebildet sind, um die erste Komponente (2) beziehungsweise eine zweite Komponente (3) der implantatgestützten Zahnprothese aufzunehmen, wobei der Multifunktionsadapter (1) aus scanbarem Material besteht und ausgebrannt werden kann;
c) Herstellen der ersten Komponente (2) und des Multifunktionsadapters (1) als integral miteinander verbunden;
d) Scannen zumindest des Multifunktionsadapters (1), um die mindestens eine Information über eine Winkelposition, eine Höhe, eine x-Achse und/oder eine Ebene zu erhalten, und Nutzen der mindestens einen Information, um die korrekte Ausrichtung der zweiten Komponente (3) der implantatgestützten Zahnprothese zu bestimmen;
e) Angießen des Multifunktionsadapters (1) auf die erste Komponente (2);
f) Ausbrennen des Multifunktionsadapters (1), um eine einzige massive Komponente zu erhalten;
g) Bereitstellen der zweiten Komponente (3) der implantatgestützten Zahnprothese mit der einzigen massiven Komponente; und
h) Herstellen der zweiten Komponente (3) und der einzigen massiven Komponente als integral miteinander verbunden.

2. Das Verfahren gemäß Anspruch 1, worin der Multifunktionsadapter einen im Wesentlichen scheibenförmigen Grundabschnitt hat, der ein erstes Plateau (1e) bestimmt, auf welchem ein im Wesentlichen zylinderförmiger oberer Abschnitt mit mindestens einer im Wesentlichen flachen Seitenfläche (1c) geformt ist und ein zweites Plateau (1f) und eine Durchgangsbohrung (1d) bestimmt, die sich in einer Längsrichtung im Wesentlichen in der Mitte des Multifunktionsadapters erstreckt.

3. Das Verfahren gemäß Anspruch 1 oder 2, worin Schritt c) durchgeführt wird durch Wachsen, Kleben, Schnappverbindung, Eingrenzen oder durch eine Befestigung mit Hilfe von Modellier-Akryl oder Kitt, und Schritt h) durchgeführt wird durch Zementieren oder Kleben.

4. Das Verfahren gemäß Anspruch 2, worin die Winkelinformation des Multifunktionsadapters anhand der flachen Seitenfläche (1c) bestimmt wird und/oder worin die Ebenen-Information anhand des ersten oder zweiten Plateaus (1e, 1f) bestimmt wird und die Höheninformation des oberen Abschnitts (1b) anhand von Ebenen-Information jedes der Plateaus (1e, 1f) bestimmt wird; und/oder worin die x-Achsen-Information des Multifunktionsadapters anhand des oberen Abschnitts (1b) bestimmt wird und/oder worin die Höhe des Grundabschnitts (1a) anhand der Ebenen-Information für das erste Plateau (1e) bestimmt wird.

5. Das Verfahren gemäß einem beliebigen der obigen Ansprüche, das weiter den Schritt des Fräsens der zweiten Komponente (3) der implantatgestützten Zahnprothese aus einem Rohling mit Hilfe der mindestens einen Information umfasst, die in Schritt (d) gewonnen wurde.

## Revendications

1. Procédé de production d'une prothèse dentaire supportée par un implant à l'aide d'un adaptateur multifonctionnel (1), comprenant les étapes suivantes :
a) la fourniture d'un premier composant (2) d'une prothèse dentaire supportée par un implant ;
b) la fourniture d'un adaptateur multifonctionnel (1) ayant un profil défini, de sorte à déterminer au moins une information d'une position angulaire, d'une hauteur, d'un axe x et/ou d'un plan, avec une partie de base (1a) et une partie supérieure (1b), la partie de base (1a) et la partie supérieure (1b) étant adaptées pour recevoir respectivement le premier composant (2) et un second composant (3) de la prothèse dentaire supportée par un implant, l'adaptateur multifonctionnel (1) étant composé d'un matériau pouvant être balayé et consumé ;
c) la solidarisation du premier composant (2) et de l'adaptateur multifonctionnel (1) ;
d) le balayage d'au moins l'adaptateur multifonctionnel (1) pour déterminer l'au moins une information d'une position angulaire, d'une hauteur, d'un axe x et/ou d'un plan et l'utilisation de l'au moins une information pour déterminer l'orientation correcte du second composant (3) de la prothèse dentaire supportée par un implant ;
e) le moulage de l'adaptateur multifonctionnel (1) sur le premier composant (2) ;
f) la consumation de l'adaptateur multifonctionnel (1) pour obtenir un composant solide unique ;
g) la fourniture au second composant (3) de la prothèse dentaire supportée par un implant du composant solide tunique; et
h) la solidarisation du second composant (3) et du composant solide unique.

2. Procédé selon la revendication 1, dans lequel l'adaptateur multifonctionnel a une partie de base sensiblement en forme de disque, définissant un premier plateau (1e), sur lequel une partie supérieure de forme sensiblement cylindrique est formée avec au moins une surface latérale sensiblement plane (1c) et définissant un second plateau (1f), et un trou de dégagement (1d), s'étendant sensiblement au centre de l'adaptateur multifonctionnel dans une direction longitudinale.

3. Procédé selon la revendication 1 ou 2, dans lequel l'étape c) est réalisée par cirage, collage, accrochage, liage ou fixation au moyen d'acryliques de modelage ou de mastic ; et l'étape h) est réalisée par cimentage ou collage.

4. Procédé selon la revendication 2, dans lequel l'information angulaire de l'adaptateur multifonctionnel est déterminée sur la base de la surface latérale plane (1c) ; et/ou dans lequel l'information de plan est déterminée sur la base du premier ou du second plateau (1e, 1f) et l'information de hauteur de la partie supérieure (1b) est déterminée sur la base de l'information de plan de chacun des plateaux (1e, 1f) ; et/ou dans lequel l'information d'axe x de l'adaptateur multifonctionnel est déterminée sur la base de la partie supérieure (1b) ; et/ou dans lequel la hauteur de la partie de base (1a) est déterminée sur la base de l' information de plan pour le premier plateau (1e).

5. Procédé selon l'une quelconque des revendications précédentes, comprenant en outre l'étape de fraisage du second composant (3) de la prothèse dentaire supportée par un implant à partir d'une ébauche à l'aide de l'au moins une information déterminée dans l'étape (d).
